# EUROPEAN PATENT SPECIFICATION

(11) **EP 1 781 976 B1**
(45) Date of publication and mention of the grant of the patent: **05.10.2016**
(21) Application number: 05777168.5
(22) Date of filing: 01.08.2005
(51) Int. Cl.: G05D 7/01

(54) **PRESSURE INDEPENDENT CONTROL VALVE**
DRUCKUNABHÄNGIGES STEUERVENTIL
SOUPAPE DE REGULATION NE DEPENDANT PAS DE LA PRESSION

(30) Priority: 02.08.2004 US 598080 P
(43) Date of publication of application: 09.05.2007
(73) Proprietor: Belimo Holding AG, 8340 Hinwil (CH)
(72) Inventor: CARLSON, Bengt, A., Tucson, AZ 85739 (US)
(74) Representative: Rüfenacht, Philipp Michael
(86) International application number: PCT/US2005/027010
(87) International publication number: WO 2006/015220

(56) References cited:
- EP-A2- 0 056 891
- FR-A1- 2 752 902
- US-A- 2 688 980
- US-A- 4 422 470
- US-A- 4 809 746
- US-A- 5 775 369
- US-B1- 6 209 578
- US-B1- 6 827 100
- US-B1- 6 827 100
- US-B2- 6 662 823

## Description

### Background of the Invention

### Field of the Invention

The invention provides valves of the type employing a differential pressure regulator and a characterized valve with a mechanism to enhance control of fluid flow independently of system pressure. The valves of the invention are especially suitable for HVAC applications, and provide operation with improved accuracy over a greater flow range with a reduced risk of hunting.

### Description ofPriorArt Related to the Invention

In HVAC plants, water distribution can be accomplished at constant or variable flow. Each type of distribution system has advantages and disadvantages. Today, variable flow systems using electronic 2-way control valves have become generally accepted as the industry standard due to their benefits, mainly reduced pumping cost achieved as a result of reducing pump head and flow.

However, a significant disadvantage with many systems in place today is that balancing the system is a time consuming and costly effort. The balancing procedure dictates the quality of the system and requires highly skilled technicians and tools. According to a typical system flow design, each control valve requires a balancing valve to adjust the hydronic circuit with all control valves must be in their open position. Then, as soon as the system is running, depending on different cooling or heating load requirements in the building, valves begin closing and opening. Each opening or closing dynamically alters system pressure, and balancing these systems becomes time consuming and can only be approximate.

If terminals are added to a typical system, the whole system requires rebalancing because some existing terminals must be throttled back. This is especially a problem where floors are periodically remodeled and the uses are varied. Wherever the uses change, balancing of the whole system is required. Moreover, a building is typically running under design conditions only a small of the time, The rest of the time, the hydronic system needs to provide an average load of only about 50%. This can mean that flow is reduced to only about 20%, and differential pressures across control valves increase. Since the CV-rating of the valve is typically sized for design conditions, the valve authority decreases and the modulating valve is downgraded to one acting open or closed only. This makes hunting expected.

Control circuits are interactive. Therefore, when one control valve closes in a system of the type described above, the differential pressures on other circuits increases and the associated control valves must close to compensate. So when one or more loops become unstable, control problems can spread to other control valves.

In typical current cooling systems, if flow is higher than required, the temperature differential of the fluid (AT) will decrease and result in a cooling plant with lower return temperatures to the chiller and reduce the efficiency. If one chiller cannot run at peak efficiency, it is more likely that the next chiller in a series will be forced to start sooner than required causing additional electricity and maintenance costs. The opposite happens in a condensing boiler where a higher return temperature can avoid the condensing process when the dew point of the exhaust gases cannot be achieved. The same phenomenon can happen in coils. In a heating coil for instance, overflow will result in a lower AT and decrease the coil's performance which can result in discomfort due too a low room temperature.

Significant developments in HVAC valves have been made in the recent past with the provision of characterized valves, in general, and particularly of the pressure independent variety. Because of these improvements, many of the disadvantages of variable flow systems are largely eliminated for most HVAC-applications. The valves now available for HVAC applications include characterized openings where the degree of opening movement is proportional to flow rate. United States Patent No. 6,039,304, to Carlson, et al., describes a ball valve with modified characteristics. The valve includes a disk for characterizing flow to permit a proportional of opening of the valve to correspond to a predetermined flow rate. These valves can provide essentially "equal percent" characteristics, as well as other flow characteristics, and are commercially available under the identifier of CCV. They employ a disk having a shaped opening with one side shaped to conform to the shape of the exterior of the ball or plug. The disk fits inside the port at the seat area, and is secured by a ring. The ability of a valve to provide a flow rate proportional to the movement of a valve actuator is of great advantage when manufacturing and installing both valves and the actuators.

EP0056891 discloses an example of prior art pressure-independent flow control valve.

It is also important for HVAC and other applications that control valves have the ability to maintain a constant flow rate despite pressure fluctuations in the system. Valves having this capability are now available. In United States Patent No. 6,827,100, to Carlson, there is described a pressure independent control valve, which enables an HVAC operator to set flow rates for any of a plurality of zones and have the selected rates remain constant independent of variations in pressure due to variations in heat transfer demand in the several zones. These valves are commercially available under the identifier of PICCV. Pressure independent control valves of the type described in United States Patent No. 6,827,100 work well over the greater part of their rated nominal flow; however, at certain pressures and flow rates, there is sometimes, especially in closed systems, a risk of oscillation.

At part-load, for instance, when a PICCV with a nominal flow of 38 L/min (10 GPM) operates at 11 L/min (3 GPM), a flow of 11 L/min (3 GPM) is maintained, and these valves provide good control with no adverse hunting. However, at higher flow rates in closed systems, oscillation can be a problem. While the problems can be addressed by providing a wide range of valve sizes and selecting valves always having an effective range, so that there would always be one that worked at the problem flow rates and pressures, it would be desirable to control the problem more directly and enable a smaller range of valve sizes to accomplish the same tasks.

There is a present need for means having the capability to simply and effectively modifying pressure independent control valves to enable to enhance control of fluid flow independently of system pressure with improved accuracy over a greater flow range with a reduced risk of hunting.

### Summary of the Invention

It is an object of the invention to provide improvements for pressure independent control valves of the type employing a differential pressure regulator and a characterized valve to enhance control of fluid flow and/or improve system stability independently of system pressure and/or flow rate.

It is an object of the invention to provide improvements for pressure independent control valves of the type employing a differential pressure regulator and a characterized valve to enhance control of fluid flow independently of system pressure.

It is another object of the invention to provide improvements for pressure independent control valves of the type employing a differential pressure regulator and a characterized valve to enable operation with improved accuracy over a greater flow range with a reduced risk of hunting.

In a preferred aspect, the invention provides improvements for pressure independent control valves of the type employing a differential pressure regulator and a characterized valve to enhance control of fluid flow independently of system pressure by the employment in the differential pressure regulator of a diaphragm with a cup arranged to provide a small leakage, thereby dampening the response of the regulator.

In another preferred aspect, the accuracy at higher flow rates of pressure independent valves of the type employing a differential pressure regulator and a characterized valve to enhance control of fluid flow independently of system pressure by providing a baffle to protect the downstream side of a control disk forming part of the differential pressure regulator.

According to one embodiment, a pressure independent fluid flow regulating valve providing a substantially constant flow rate for each set position, comprises: a flow passage leading to a characterized valve having an inlet from and an outlet to said flow passage; upstream of said characterized valve, a seat orifice intersecting said flow passage; a moveable assembly, comprising a disk connected to by a stem, and operated by a pressure sensing means; wherein the disk is located downstream of the seat with which it interacts to vary the flow resistance, and the effective surface area of the disk is essentially the same as the effective surface area of said pressure sensing means; downstream of the disk, a baffle is mounted in a fixed position, close to the disk but at a distance permitting the movement of the disk; the pressure sensing means operates inside a cylinder or chamber which it divides in two portions, wherein one portion is connected to the inlet, and the other portion is connected via reference pressure passage to a point downstream of the characterized valve; and spring means for biasing said moveable assembly.

Other embodiments are covered by the dependent claims.

Additional and preferred features of the invention will be described below with the positions of the different parts as shown in the figures.

### Brief Description of the Drawings

The invention will be further described and its advantages made more apparent when the following detailed description of the invention is read in connection with the accompanying drawings, wherein:
**FIG. 1** is a schematic cross-sectional view of a pressure independent control valve not related to the present invention illustrating among other things a cup covering the upper side of the diaphragm, which works with a stem and loosely fit center hole to dampen the reaction of the regulator.
**FIG. 2** is a schematic cross-sectional view of the same pressure independent control valve as in **FIG. 1****,** but having a baffle to the area on top of the control disk to counteract an effect of rapid fluid flow against the downstream side of a control disk according to the present invention.
**FIG. 3** is a schematic cross-sectional view of the same pressure independent control valve as in **FIG. 2****,** but without the cup and with a baffle with raised edges.
**FIG. 4** is a schematic cross-sectional view of the same pressure independent control valve as in **FIG. 3****,** but with a cup added to the top of the upper side of the diaphragm.
**FIG. 5** is a schematic cross-sectional view of the same pressure independent control valve as in **FIG. 4****,** but with a control disk with raised edges.
**FIG. 6** is a schematic cross-sectional view of an alternative solution to the pressure independent control valve, wherein the control valve is placed before the pressure regulator and a cup has been placed so it covers the upper side of the diaphragm of the pressure regulator.

### Detailed Discussion of the Preferred Embodiments of the Invention

The invention is described below with regard to specific embodiments which illustrate the arrangement and function of various component parts for valves of particular interest, but the mechanisms and principles can be applied by the skilled worker to other arrangements. The invention provides both a construction capable of dampening the response of a differential pressure regulator component of a pressure independent control valve or one to counteract an effect of rapid fluid flow against the downstream side of a control disk in valves of this type. The valves of the invention can provide a characterized valve **10** either upstream or downstream of a pressure chamber **2** differential pressure regulator component. The details of the characterized valve **10** form no part of the invention, and the characterized valve **10** is illustrated here schematically only. Reference can be had to United States Patent No. 6,039,304, to Carlson, et *a*/*.,* and United States Patent No. 6,827,100, to Carlson, for specific structures of interest.

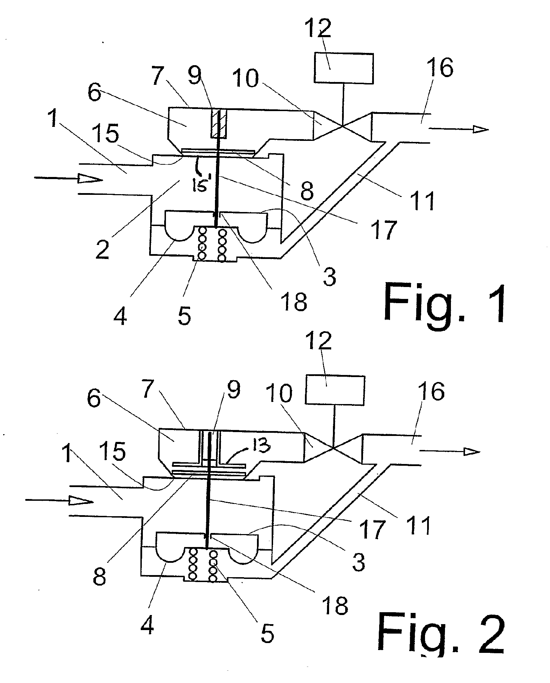

Referring to **FIG. 1****,** there is shown a pressure independent valve not belonging to the present invention. The valve includes an inlet **1** and outlet **16.** The inlet **1** communicates with a pressure chamber 2, which can communicate with a second pressure chamber **6,** via a seat **15** in opening **15'** and a control disk **8.** The control disk **8** is connected to pressure sensing means comprising a diaphragm **4** via a stem **17.** The stem **17** has an extension and is guided by a guide post **9.** The guide post **9** is attached to, or a part of the valve body **7.** An assembly comprising the control disk **8,** stem **17** and a pressure sensing means comprising diaphragm **4** can move as one unit such that control disk **8** can move between open and closed positions as stem is moved by diaphragm **4.** A spring **5** is biasing the assembly. Throughout this description alternative means, such as a piston working in a cylinder or similar pressure sensing means, can be employed in place of the diaphragm **4.**

In the embodiment of **FIG. 1****,** there is provided a cup **3** with a center hole **18** for the stem **17** to provide dampening and enhance system stability. The cup **3** is placed over and covers the upper area of the pressure sensing means comprising diaphragm **4.** The center hole **18** has a diameter slightly larger than the stem **17,** so the play is small and a resistance to a leakage of fluid between the diaphragm 4 and the pressure chamber 2 is created. The exact numerical value of the tolerance is not critical, and is typically large enough to provide control force to reach the diaphragm **4.** The flow, being less than immediate, dampens the reaction of the pressure regulator and leads to a more stable function of the pressure independent valve.

In the embodiment of **FIG. 1****,** a characterized valve **10** is connected between the pressure chamber **2** and the outlet **16.** The characterized valve **10** can be operated manually or by an actuator **12.** The pressure at the outlet **16** is via a reference channel **11** brought back to the under side of the diaphragm **4** which is biased by a spring **5.**

Turning now to **FIG. 2****,** an inventive embodiment of a pressure independent valve is shown with all parts identical to the **FIG. 1****,** except that a baffle **13** has been added. The baffle **13** is attached to the guide post **9.** The baffle **13** is positioned just slightly above the highest point of the operating range of the control disk **8.**

Under some conditions, jets of fluid are formed around the periphery of the control disk **8** as the fluid moves between the control disk **8** and the seat **15** of the differential pressure regulator. These jets can hit the wall of the valve body **7** and bounce back against the top of the control disk **8.** The baffle **13** prevents the jets from impacting the control disk **8** so the force balance of the control disk **8** is not influenced. With the baffle **13** the accuracy of the pressure independent valve is improved, especially at higher flow rates.

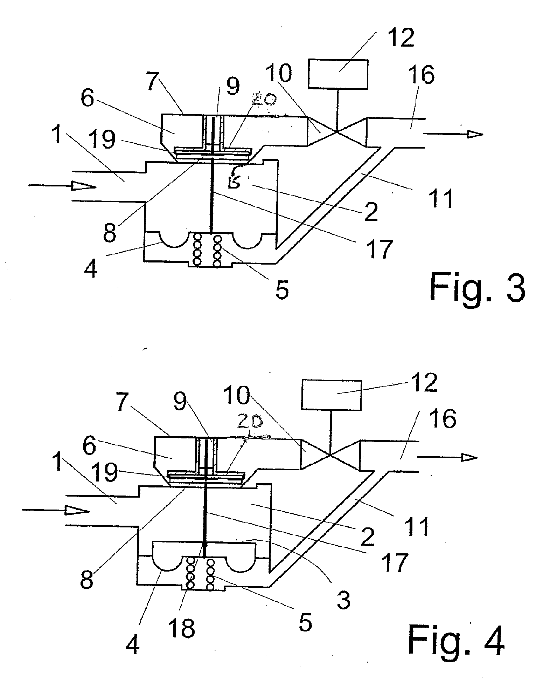

Turning to **FIG. 3****.** there is shown a pressure independent valve with all parts identical to the **FIG. 2****,** except no cup **3** has been added and a special baffle **20** is used. The special baffle **20** has a peripheral edge (flange) **19** on the perimeter of the baffle **20.** The peripheral edge **19** faces downward and has an inside diameter slightly larger than the control disk **8.** This makes it possible to fit the control disk **8** inside the edge **19.** This protects the inside of the control disk **8.** If the play between the control disk **8** and the inside of the edge **19** is small the cup **3** can be dispensed with, as a damping action takes place between the control disk **8** and the special baffle **20.**

Turning to **FIG. 4****,** there is shown a pressure independent valve with all parts identical to the **FIG. 3****,** including cup **3** has been added and a special baffle **20,** as in **FIG. 3****,** is used. The special baffle **20** has an edge **19** on the perimeter of the baffle **20.** It faces downward and has an inside diameter slightly larger than the control disk **8.** This makes it possible to fit the control disk **8** inside the edge **19.** This protects the inside of the control disk **8** and a dashpot is formed, which together with the cup 3 has to the effect that the pressure regulator is dampened, and the pressure independent valve is stabilized.

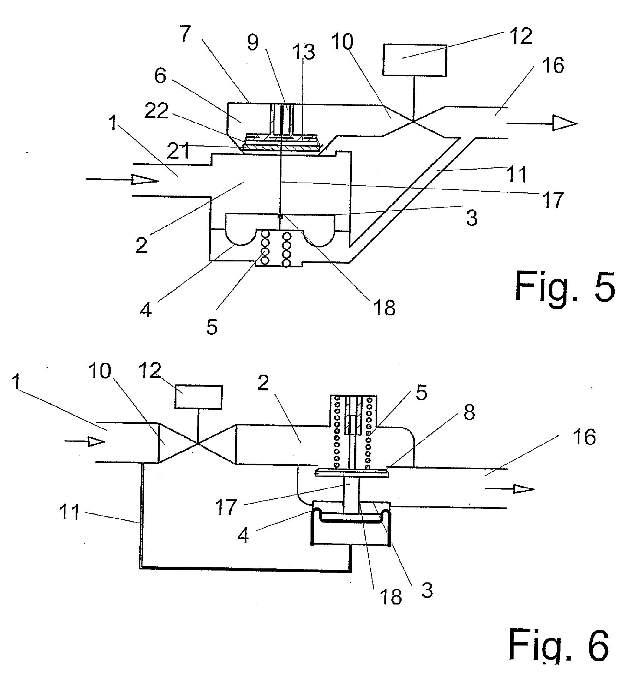

Turning to **FIG. 5****,** there is seen a pressure independent valve with all parts identical to the **FIG. 4****,** including cup **3** has been added and a baffle **13** is used but, instead of control disk **8,** a special control disk **21** is employed having an edge (flange) **22** on the perimeter of the control disk **21.** The edge **22** faces upward and has an inside diameter slightly larger than the baffle **13.** This makes it possible to fit the baffle **13** inside the edge 22, which protects the inside of the control disk. A dashpot is formed by these components, which work together with the cup **3** to provide the effect that the pressure regulator is dampened, and the pressure independent valve is stabilized.

The pressure independent valve can have the control valve after or before the differential regulator as described in United States Patent No. 6,827,100. Turning to **FIG. 6** there is seen a pressure independent valve of the invention with the characterized valve **10** placed before the differential pressure regulator. In this embodiment, the pressure independent valve includes an inlet **1** and outlet **16.** The inlet **1** communicates with the characterized valve **10,** which can communicate with a pressure chamber **2.** From there the fluid passes through the seat **15** and control disk **8** into the outlet **16.** The control disk **8** is connected to a diaphragm **4** via a stem **67.** The stem **17** is guided by a guide post 9. The control disk **8,** stem **17** and diaphragm **4** can move as one unit. A cup **3** with a center hole **18** for the stem **17** is placed over the cup **3** which covers the upper area of the diaphragm **4.** The center hole **18** has a diameter only slightly larger than the stem **17,** so a resistance to the flow of fluid between the diaphragm **4** and the pressure chamber **6.** This dampens the reaction of the pressure regulator and leads to a more stabile function of the pressure independent valve. The pressure at the inlet **1** is via a reference channel **11** brought to the under side of the diaphragm 4 which is biased by a spring 5.

In the various embodiments of the invention, a cup **3,** a baffle **13** or **20** or a control disk **21** can be used singly or in combination. **FIGs 2****,** **4** and **6** show different versions of a valve according to the invention wherein a cup **3** has been added over the diaphragm area of a valve of the type employing a differential pressure regulator and a characterized valve. The cup has a hole in the center for the spindle. The hole has slightly larger diameter than the spindle. The volume under the diaphragm is in communication with a reference pressure located either upstream or downstream of the valve, depending upon the type of the valve.

It is of particular advantage that the diaphragm can be enclosed by a cup or similar device to provide improved response with limited hunting. The volume on top of the diaphragm is enclosed by the cup. Fluid from the inlet or outlet can communicate with the enclosed volume through a restriction. It can be in the form of the play between the spindle and the hole. The restriction is the leakage between the two. Or, it can be a very tight play between the spindle and the hole in the cup, so there will be a very small leakage and then use a very fine opening in the cup as a restriction. However, the first alternative is preferred.

The cup described above has advantageous effect that the short term pressure variations over the valve and thereby the diaphragm can be attenuated. This improves the stability of the differential pressure regulator and can eliminate the hunting that otherwise can occur when the pressure and the flow is getting too high.

The flow of fluid is controlled by a control disk and a seat in the differential pressure regulator. It is another advantage of the invention that this control disk can be shielded by a baffle or shield, mounted over the top of the control disk so that it is covered and protected from downward jets of fluid. These downward jets of fluid are caused by fluid flowing from the periphery of the control disk and the seat of the differential regulator hitting the wall of the regulator and moving back against the top of the control disk. It is an advantage of the invention that the baffle prevents the jets from impacting the control disk so the force balance of the control disk is not influenced.

It is an advantage of the invention that the baffle enhances the accuracy of the pressure independent valve, especially at higher flows. The baffle is preferably firmly attached to the wall or guide past of the valve body.

The bottom part of the baffle is situated just slightly above the highest position of the movement of the control disk. This provides the benefit that water can pass between the top side of the baffle and the wall of the differential pressure regulator. In a preferred form, the baffle is a disk with a stand off that also works as a fastening device. The fastening device can attach to the wall of the valve body or to the guide post.

The baffle can be a simple disk or have raised edges, so it forms a cylindrical cup. The edges preferably face the control disk. If the edge has a diameter slightly larger than the control disk, it can partially operate inside the baffle and a damping mechanism has been accomplished.

As an alternative, the control disk can have raised edges, so that it forms a cylindrical cup. In this case the edges face the baffle. If the edges have a diameter slightly larger than the baffle so that it can partially operate inside the control disk and a damping mechanism has been accomplished.

## Claims

1. A pressure independent fluid flow regulating valve providing a substantially constant flow rate for each set position, comprises:
a flow passage leading to a characterized valve (10) having an inlet (1) from and an outlet (16) to said flow passage; upstream of said characterized valve (10), a seat orifice intersecting said flow passage;
a moveable assembly, comprising a disk (8; 21) connected to by a stem (17), and operated by a pressure sensing means (4);
wherein the disk (8; 21) is located downstream of the seat with which it interacts to vary the flow resistance, and the effective surface area of the disk (8; 21) is essentially the same as the effective surface area of said pressure sensing means (4);
downstream of the disk (8; 21), a baffle(13; 20) is mounted in a fixed position, close to the disk (8; 21) but at a distance permitting the movement of the disk (8; 21);
the pressure sensing means (4) operates inside a cylinder or chamber which it divides in two portions, wherein one portion is connected to the inlet (1), and the other portion is connected via reference pressure passage to a point downstream of the characterized valve (10); and
spring means (5) for biasing said moveable assembly.

2. Pressure independent valve according to claim 1, wherein the baffle (20) has an edge (19) on the side facing the disk (8).

3. Pressure independent valve according to claim 1, where the disk (21) has an edge on the side facing the baffle (13).

4. Pressure independent sensing valve according to claim 1, where a cup (3) covers one side of the pressure sensing means (4) and includes a small opening (18) acting as a resistance to the fluid.

5. Pressure independent sensing valve according to claim 4, where the resistance to the fluid is in the form of the play between the cup (3) and a spindle passing a hole in the cup.

## Patentansprüche

1. Druckunabhängiges Fluiddurchfluss-Regulierungsventil, das für jede eingestellte Position eine im Wesentlichen konstante Durchflussmenge bereitstellt und Folgendes umfasst:
einen Strömungsdurchlass, der zu einem Regelkugelhahn (10) führt, der einen Einlass (1) von dem und einen Auslass (16) zu dem Strömungsdurchlass besitzt; wobei stromaufseitig des Regelkugelhahns (10) eine Sitzöffnung den Strömungsdurchlass kreuzt;
eine bewegliche Anordnung, die eine Scheibe (8; 21) aufweist, die durch einen Schaft (17) mit Druckerfassungsmitteln (4) verbunden und durch diese betätigt wird;
wobei sich die Scheibe (8; 21) stromabseitig des Sitzes, mit dem sie in Wechselwirkung steht, um den Strömungswiderstand zu verändern, befindet, und der effektive Oberflächeninhalt der Scheibe (8; 21) im Wesentlichen gleich dem effektiven Flächeninhalt der Druckerfassungsmittel (4) ist;
stromabseitig der Scheibe (8; 21) ein Dämpfer (13; 20), der an einer festen Position in der Nähe der Scheibe (8; 21), jedoch in einem Abstand, der die Bewegung der Scheibe (8; 21) zulässt, montiert ist;
wobei die Druckerfassungsmittel (4) in einem Zylinder oder einer Kammer arbeiten, den bzw. die sie in zwei Abschnitte unterteilen, wobei ein Abschnitt mit dem Einlass (1) verbunden ist und der andere Abschnitt über einen Referenzdruckdurchlass mit einem Punkt stromabseitig des Regelkugelhahns (10) verbunden ist; und
Federmittel (5), um die bewegliche Anordnung vorzubelasten.

2. Druckunabhängiges Ventil nach Anspruch 1, wobei der Dämpfer (20) eine Kante (19) auf einer der Scheibe (8) zugewandten Seite aufweist.

3. Druckunabhängiges Ventil nach Anspruch 1, wobei die Scheibe (21) eine Kante auf einer dem Dämpfer (13) zugewandten Seite aufweist.

4. Druckunabhängiges Erfassungsventil nach Anspruch 1, wobei eine Kappe (3) eine Seite der Druckerfassungsmittel (4) abdeckt und eine kleine Öffnung (18) aufweist, die als ein Widerstand für das Fluid wirkt.

5. Druckunabhängiges Erfassungsventil nach Anspruch 4, wobei der Widerstand für das Fluid die Form des Spiels zwischen der Kappe (3) und einer Spindel, die durch ein Loch in der Kappe verläuft, hat.

## Revendications

1. Vanne de régulation du débit d'un fluide indépendante de la pression fournissant un débit sensiblement constant pour chaque position de réglage, comprenant :
un passage conduisant à une vanne de régulation (10) ayant une entrée (1) depuis et une sortie (16) vers ledit passage ; en amont de ladite vanne de régulation (10), un orifice de siège coupant ledit passage ;
un ensemble mobile, comprenant un disque (8 ; 21) relié par une tige (17) à un moyen de détection de pression (4) et actionné par ce dernier ;
le disque (8 ; 21) étant situé en aval du siège avec lequel il interagit pour faire varier la résistance à l'écoulement, et la surface effective du disque (8 ; 21) étant essentiellement la même que la surface effective dudit moyen de détection de pression (4) ;
en aval du disque (8 ; 21), une chicane (13 ; 20) montée dans une position fixe, près du disque (8 ; 21), mais à une distance permettant le déplacement du disque (8 ; 21) ;
le moyen de détection de pression (4) fonctionnant à l'intérieur d'un cylindre ou d'une chambre qu'il divise en deux parties, une partie étant raccordée à l'entrée (1), et l'autre partie étant raccordée par le biais d'un passage de pression de référence à un point en aval de la vanne de régulation (10) ; et
un moyen de ressort (5) pour exercer une force de rappel sur ledit ensemble mobile.

2. Vanne indépendante de la pression selon la revendication 1, dans laquelle la chicane (20) a un bord (19) sur le côté tourné vers le disque (8).

3. Vanne indépendante de la pression selon la revendication 1, dans laquelle le disque (21) a un bord sur le côté tourné vers la chicane (13).

4. Vanne de détection indépendante de la pression selon la revendication 1, dans laquelle une coupelle (3) recouvre un côté du moyen de détection de pression (4) et comporte une petite ouverture (18) agissant comme une résistance au fluide.

5. Vanne de détection indépendante de la pression selon la revendication 4, dans laquelle la résistance au fluide se présente sous la forme du jeu entre la coupelle (3) et un axe passant par un trou dans la coupelle.
